# DEMANDE DE BREVET EUROPEEN

(11) **EP 0 945 302 A1**
(43) Date de publication de la demande: **29.09.1999**
(21) Numéro de dépôt: 99400745.8
(22) Date de dépôt: 26.03.1999
(51) Int. Cl.: B60N 2/42, B64D 25/04

(54) **Dispositif d'évacuation de masse, structure de siège, siège et véhicle équipé de ce dispositif**

(30) Priorité: 27.03.1998 FR 9803837
(71) Demandeur: SOCIETE INDUSTRIELLE ET COMMERCIALE DE MATERIEL AERONAUTIQUE (SICMA) SOCIETE ANONYME, F-36100 Issoudun (FR)
(72) Inventeur: Bedouch, Pierre-François, 36100 Issoudun (FR)
(74) Mandataire: Derambure, Christian

(57) **Abrégé**

L'invention concerne notamment un dispositif (1) d'évacuation de masse destiné à une structure de siège de véhicule pour le transport notamment aérien.

Ce dispositif (1) comporte un écran (15) de réception d'impact et un organe formant navette (16) de support d'une partie du dossier; l'organe formant navette (16) étant monté déplaçable entre deux positions: l'une d'utilisation normale, et l'autre d'évacuation de masse, où l'organe formant navette (16) est écarté de l'écran (15) de réception; des moyens à ouverture inertielle d'arrimage (18) de l'organe formant navette (16) en position de repos.

## Description

L'invention vise un dispositif d'évacuation de masse pour siège de véhicule, ainsi qu'une structure de siège, un siège et un véhicule notamment un aéronef, équipés d'un tel dispositif.

Le domaine technique général de l'invention est l'équipement de sécurité des véhicules pour passagers.

Plus précisemment, l'invention vise à renforcer la protection d'un passager de véhicule, lors d'un accident tel qu'une collision du véhicule avec un obstacle naturel ou érigé par l'homme, comme le sol, une surface liquide, ou un autre véhicule.

L'objectif de l'invention est plus particulièrement d'apporter une protection supplémentaire contre des impacts secondaires de la tête du passager, sur un équipement de bord tel que le dossier d'un siège situé devant lui.

L'invention est applicable aux véhicules notamment de transport en commun.

Sont concernés soit les véhicules de surface, tels qu'embarcations flottantes ou véhicules ferroviaires et routiers, soit les véhicules aériens, tels qu'avions de lignes.

Ces derniers étant soumis à des contraintes normatives de sécurité particulièrement élevées, l'invention devrait donc connaître d'importantes applications industrielles relatives aux sièges de tels véhicules.

Le document US-A-3.588.172 décrit un tel siège, à dossier réglable en position.

De nombreux équipements de sièges notamment participent à la sécurité de passagers de véhicules.

Il est ainsi quasiment obligatoire aujourd'hui d'équiper un siège de véhicule, d'un système de rétention ventral, tel qu'une ceinture.

Toutefois, ces systèmes ne permettent pas une protection optimale, notamment en matière de blessures encéphaliques.

Pour cette raison, des systèmes à coussins gonflables, tels que ceux montés dans les volants ou tableaux de bords de véhicules routiers, ont connu un succès grandissant jusqu'à nos jours.

Mais ces coussins doivent être reliés à un détecteur de chocs, et comporter chacun un déclencheur actif, tel que charge pyrotechnique et capsule de gaz sous pression.

Semble-t'il pour ces raisons, les systèmes à coussins ne sont pas appliqués à certains véhicules.

Un siège de véhicule aérien est ainsi proposé actuellement avec d'une part une ceinture et d'autre part un système destructif d'absorbsion d'énergie, en général par déformation plastique de son piétement.

Alors que les sièges de véhicule en particulier aérien, doivent répondre à des conditions drastiques de coût, légéreté, encombrement et résistance.

Le but de l'invention est de pallier ces inconvénients notamment.

L'invention prévoit pour ce faire, d'effectuer une évacuation de la masse d'une partie au moins d'un équipement de bord situé face à un passager tel que partie d'un dossier d'un siège ou d'une cloison en tête de rang.

Plus précisemment, l'invention propose un dispositif de sécurité par évacuation de masse, appliqué aux chocs contondants de la tête d'un passager de véhicule de transport, contre un tel équipement placé devant lui.

Un tel choc survient dans le cas d'un véhicule de transport aérien, notamment lors d'un atterrisage d'urgence ou lorsqu'un avion à l'arrêt est percuté depuis l'avant par un objet en déplacement.

Dans de telles conditions, le véhicule et donc ses passagers, subissent d'importantes décélérations dans leur avancement (freinage violent) ou accélérations vers l'arrière.

Ces décélérations ou accélérations brutales peuvent provoquer des chocs et blessures, voire le décès de passagers.

L'invention propose d'employer ces décélérations ou accélérations pour effacer (mettre hors de portée) des masses de l'équipement de bord en face de et à même d'être percuté par un passager.

Alors, ces masses deviennent inexistantes ou "transparentes" en cas de choc du passager avec elles.

Evidemment, le fonctionnement usuel de l'équipement de bord (dossier, paroi, cloison, etc.) et de ses accessoires est préservé durant son utilisation normale.

Le dispositif d'évacuation illustré dans les exemples est destiné à être intégré à la structure d'un siège et à permettre:
- d'apporter une protection supplémentaire des passagers de sièges de véhicules ;
- de prévoir un système passif, sans apport d'énergie motrice telle que gaz d'expansion, ressort ou moteur de déclenchement, par l'utilisation de l'énergie propre du choc pour assurer son fonctionnement ;
- d'offrir un dossier de siège avec des équipements de confort (tablette, coussins, repose-tête, etc.) ou de divertissement (téléphone, écran d'ordinateur ou vidéo, etc.) utilisables par le passager dans le siège arrière sans que leur masse ne constitue une source de dommage en cas de choc ;
- de permettre dans le cas de chocs tels que la structure de siège n'est pas altérée, mais qu'une évacuation de masse s'est avérée nécessaire ;
- de replacer le dossier dans un état d'utilisation, le fonctionnement de cette évacuation n'étant alors pas destructif ; et
- de répondre aux contraintes usuelles telles que coût, encombrement, poids, nombre limité de pièces constitutives, structure et fabrication simples.

A cet effet, un premier objet de l'invention est un dispositif d'évacuation de masse destiné à une structure de dossier de siège de véhicule pour le transport de passagers.

Cette évacuation d'une partie au moins de la masse du dossier, permet en cas de choc, la mise de cette masse hors de la portée d'un passager installé derrière le siège, afin de limiter les blessures provoquées par l'impact de sa tête contre l'arrière du dossier.

Ce dipositif comporte au moins une armature montée sur la structure de dossier, comprenant un écran de réception d'impact et un organe formant navette de support d'une partie au moins des moyens d'adossement du dossier et/ou d'accessoires de confort, esthétiques ou de divertissement.

L'organe formant navette est monté déplaçable sensiblement suivant une direction d'impact, par rapport à l'écran de réception, par exemple autour d'un axe d'articulation sensiblement transversal, entre deux positions extrêmes :
- l'une d'utilisation normale ou de repos, où l'organe formant navette est proche de l'écran de réception, et
- l'autre d'évacuation de masse, où l'organe formant navette (et donc les masses qu'il supporte) est écarté de l'écran de réception sensiblement suivant la direction et un sens d'impact.

Le dispositif comporte en outre des moyens à ouverture inertielle d'arrimage de l'organe formant navette en position d'utilisation normale.

Ces moyens à ouverture inertielle d'arrimage sont agencés pour libérer l'organe formant navette lorsque cet organe est soumis à une accéleration sensiblement suivant la direction et un sens d'impact, supérieure à une valeur prédéterminée.

Par exemple, la valeur prédéterminée ou calibrée est de l'ordre de 2G à 5G.

Ainsi, la position d'évacuation de masse est déclenchée, lorsque l'armature est montée, dès qu'un impact du passager sur le dossier derrière la partie d'adossement du siège est possible. De fait, l'organe formant navette est effacé, et l'impact est reçu par l'écran de réception, aménagé à cette fin.

Selon une caractéristique, l'étendue de la surface occupée par l'écran de réception est au moins égale à la surface potentielle d'impact de la tête d'un passager à l'arrière du siège, par exemple ce passager est installé dans un autre siège.

Selon une autre caractéristique, l'organe formant navette et l'écran de réception présentent des formes et dimensions telles que l'un puisse au moins en partie s'emboîter dans l'autre, en position d'utilisation normale.

Dans une réalisation, l'organe formant navette, par exemple avec des accessoires de confort et/ou esthétiques et/ou de divertissement, est emboîté dans l'écran.

Selon encore une caractéristique, suivant la direction et le sens d'impact, l'écran de reception et l'organe formant navette sont disposés au moins en partie l'un devant l'autre.

Dans une réalisation, l'organe formant navette est disposé contre une face avant de l'écran de réception, par exemple cet organe masque en majeure partie, voire totalement, la face avant de l'écran.

Suivant une caractéristique, les moyens d'arrimage inertiels sont au moins en partie disposés à proximité d'un sommet de l'armature suivant une direction d'élévation, et par exemple à l'opposé d'un axe d'articulation de l'organe formant navette, suivant la direction d'élévation.

Selon une autre caractéristique, les moyens d'arrimage comportent un système de rétention de la navette, calibré en effort.

Dans une réalisation, ces moyens de rétention comportent des moyens à rétention continue, tels que ressort et/ou masse calibrés.

Une réalisation prévoit que ces moyens de rétention comportent des moyens fusibles ponctuels, par exemple multiples, tels que notamment au moins un:
- joint de colle ou analogues;
- bande d'accrochage amovible à deux rubans (notamment de type Velcro);
- point de soudure;
- point de solidarisation par obstacle tel que clinchage, rivet fusible ou analogues;
- moyens de pincement élastique tels qu'agrafe dite "clip"; et
- section mécaniquement "fusible" de matériau de l'écran et/ou de l'organe formant navette.

Selon encore une caractéristique, les moyens d'arrimage comprennent en outre un système de verrouillage mécanique sécurisant la rétention de l'organe formant navette, calibrés en effort.

Dans une réalisation, le système de verrouillage comprend au moins un crochet ou analogue, destiné à permettre un maintien en position d'utilisation normale de l'organe formant navette.

Suivant une caractéristique, les moyens d'arrimage comportent des moyens formant butée, tels qu'au moins une butée active, destinée à limiter le déplacement de l'organe formant navette dans sa position d'évacuation de masse.

La butée active est conformée pour qu'en position d'évacuation de masse, l'organe formant navette soit écarté de l'écran de réception d'un angle par rapport à une direction d'élévation, de bas en haut et depuis l'arrière vers l'avant, de l'ordre de 15° à 45°.

Selon une autre caractéristique, le dispositif comporte des moyens formant butée, tels qu'au moins une butée passive, agencés pour soutenir le passage des efforts d'adossement vers l'écran de réception.

Les moyens formant butée comprennent par exemple au moins:
- une structure fixe relativement à l'écran de reception et contre laquelle l'organe formant navette vient en butée et/ou
- un lien tel que câble -éventuellement à poulie de guidage- ou biellette, relié à l'organe formant navette et l'écran de réception, et étendu entre eux en position d'évacuation.

Par exemple, les moyens formant butée avant ou active comprennent une paire de bielles reliées entre elles et articulées d'une part à l'écran de réception et d'autre part à l'organe formant navette.

Selon une autre caractéristique, les moyens d'arrimage comprennent des moyens de rappel immédiat de l'organe formant navette vers l'écran de réception, après que la navette ait atteint sa position d'évacuation activée par le choc.

Par exemple de tels moyens comportent au moins un ressort, jeu de liens élastiques ou "sandow", vérin à gaz ou analogues.

Selon encore une caractéristique, les moyens de rappel comportent des moyens de blocage dans une position proche ou similaire à la position de repos, après rappel depuis la position d'évacuation.

Selon une caractéristique, l'écran de réception comporte au moins une partie :
- en matériau structurellement léger tel que panneau en matière synthétique, nid d'abeille ou analogues et/ou
- d'amortissement de chocs par écrasement sur une face arrière, tel que rembourrage local.

Selon une autre caractéristique, l'écran de réception comporte au moins une zone préférentielle de flexion contrôlée suivant la direction et le sens d'impact, pour qu'en cas d'impact supérieur à une valeur prédéterminée, une partie de l'énergie du choc est absorbée par une déformation plastique d'une partie de l'écran.

Selon encore une caractéristique, l'écran de réception est monté déplaçable par l'intermédiaire d'une articulation, et comporte une butée de transfert partiel de la fonction d'évacuation, cette butée limitant un débattement de l'écran suivant la direction et le sens d'impact.

Un élément d'amortissement tel que vérin d'inclinaison de dossier est relié à cet écran, de façon à limiter le débattement en constituant un amortisseur s'y opposant.

Dans une réalisation, l'organe formant navette comporte des moyens de guidage en rotation autour d'un axe d'articulation transversal, tandis que l'écran de réception est monté avec au moins une butée de tranfert, telle qu'une lumière oblongue sensiblement longitudinale dans laquelle est logé un pion apte à limiter le débattement de la navette.

L'articulation de transfert est distincte de celle de l'organe formant navette, par exemple étendue à distance en élévation vers le bas.

Un deuxième objet de l'invention est une structure de siège de véhicule de transport en commun, notamment d'avion de ligne, pourvue d'au moins un tel dispositif d'évacuation.

Cette structure de siège comporte au moins un piètement fixe, une structure d'assise, et une structure de dossier, montées sur le piétement, la structure de dossier étant inclinable autour d'un axe de rotation sensiblement transversal.

Selon une caractéristique, la structure de dossier et l'organe formant navette sont montés autour de deux axes transversaux proches notamment en élévation, voire d'un axe commun.

Une structure de dossier, porteuse d'organes d'adossement tels que coussins, est intégrée à la navette et/ou à l'écran.

Selon une autre caractéristique, l'organe formant navette est monté déplacable autour d'un axe transversal proche en élévation du milieu de la structure de dossier, entre son axe de basculement et son sommet.

Selon encore une caractéristique, l'organe formant navette est monté déplacable autour d'un axe transversal situé en élévation entre le milieu de la structure de dossier et son axe de basculement.

Par exemple, l'axe transversal est situé en élévation sensiblement à mi-distance entre le milieu de la structure de dossier et son axe de basculement.

Selon encore une caractéristique, l'organe formant navette est monté déplacable autour d'un axe transversal situé en élévation entre le milieu de la structure de dossier et son sommet.

Un troisième objet de l'invention est un siège de véhicule de transport, par exemple aérien, équipé d'au moins un dispositif d'articulation et/ou d'une structure tels qu'évoqués.

Ce siège destiné à faire partie d'un ensemble de sièges disposés en rangs consécutifs, comporte au moins un organe formant navette avec un ou plusieurs:
- accessoire de confort tel que coussin, repose-tête, tablette, cendrier ou analogues; et/ou
- accessoire esthétiques tels que garniture ou capôt; et/ou
- accessoire de divertissement tel que téléphone, écran de visualisation, système audio/vidéo, ou analogues.

Un quatrième objet de l'invention est un véhicule de transport pour passagers par exemple aérien, équipé d'au moins un dispositif d'evacuation et/ou d'une structure et/ou d'un siège tels qu'évoqués.

L'invention est décrite en détail maintenant, en se reportant aux dessins annexés, donnés uniquement à titre d'exemple.

La figure 1 est un diagramme qualitatif d'efficacité de dégagement, avec en abscisses la course possible effectuée par un dispositif d'évacuation de masse, et en ordonnées une dimension ou hauteur d'impact de la tête d'un passager derrière le siège équipé du dispositif.

La figure 2 est une vue schématique partielle d'élévation longitudinale, d'un véhicule selon l'invention, équipé pour chaque siège d'un rang derrière lequel est installé un passager, d'un dispositif d'évacuation selon l'invention.

La figure 3 est une vue schématique partielle en perspective d'élévation longitudinale partiellement en coupe d'un dossier de siège, avec un dispositif selon l'invention dont la navette est articulée à sensiblement la moitié de la dimension du dossier en élévation.

La figure 4 est une vue similaire à la figure 3, avec un dispositif selon l'invention dont la navette est articulée sensiblement autour d'un axe confondu avec celui de l'articulation de basculement du dossier, cette navette étant étendue en élévation depuis le sommet de ce dossier jusqu'à son assise.

La figure 5 est une vue similaire à la figure 4, avec un dispositif selon l'invention dont la navette est articulée à sensiblement un tiers de la dimension du dossier en élévation, depuis le sommet de ce dossier.

La figure 6 est une vue schématique partielle similaire à la figure 5, qui illustre un lieu d'impact d'un passager supérieur ayant provoqué, outre l'évacuation, un amortissement par flexion et déformation contrôlées de l'écran.

La figure 7 est une vue schématique partielle similaire à la figure 6, qui illustre un lieu d'impact inférieur ayant provoqué, outre l'évacuation, uniquement un amortissement par déformation contrôlée de l'écran.

Les figures 8 à 11 sont des vues partielles schématiques en élévation longitudinale avec respectivement une navette montée sur une structure de dossier à l'aide d'un axe d'articulation transversal situé en élévation, respectivement:
- entre le sommet et la moitié du dossier;
- à proximité de la moitié du dossier;
- entre la moitié et l'articulation de basculement du dossier; et
- avec l'axe de montage de la navette et de basculement du dossier confondus.

La figure 12 est une vue partielle schématique d'élévation longitudinale d'un dispositif d'évacuation selon l'invention, dans lequel la navette comporte un module vidéo-téléphone-têtière, un système inertiel libérant ce module avant l'impact, et un habillage du dossier permetant la sortie du module.

L'écran de réception d'impact comporte une tôle perforée et la butée active en position d'évacuation est assurée par des biellettes.

La figure 13 est une vue similaire à la figure 12, qui illustre un autre mode de réalisation de système inertiel de déverrouillage.

La figure 14 est une vue schématique similaire à la figure 11, qui illustre en position d'évacuation un dispositif selon l'invention avec un système à câble et poulie, sous tension d'un ressort.

La figure 15 est une vue schématique en perspective d'élévation longitudinale arrière du dispositif de la figure 14.

La figure 16 est une vue schématique partielle d'élévation longitudinale d'une réalisation de l'invention, la position de repos étant représentée en trait tiretté et une position intermédiaire finale post-impact dite de "re-stockage" l'étant en trait plein.

La figure 17 est une vue similaire à la figure 16, illustrant une position de libération de la navette dans la phase de décélération vers l'avant due à un choc.

La figure 18 est une vue schématique partielle en perspective d'élévation transversale arrière d'un dispositif d'évacuation monté sur une structure de dossier en "U" renversé.

La figure 19 est une vue schématique partielle d'élévation longitudinale d'une structure de dossier de siège équipée d'un dispositif selon l'invention.

Sur les figures, sont représentées des directions mutuellement orthogonales X, Y et Z.

La direction X dite longitudinale, et la direction Z dite transversale, sont considérées sensiblement horizontales. Tandis que la direction Y dite d'élévation est considérée sensiblement verticale, dans le repère du siège.

L'invention est décrite ici en se reportant à ces directions X, Y et Z.

Les constituants de l'invention sont décrits dans leurs positions et orientations courantes d'utilisation.

Mais il va de soi qu'ils peuvent prendre diverses positions ou orientations. Tel est le cas notamment pour les constituants déplaçables, déformables ou mobiles. De même, les positions et orientations de stockage des constituants de l'invention peuvent être différentes.

Ces positions et orientations sont donc indiquées uniquement à titre explicatif.

Il est précisé ici que les termes "avant" et "arrière" sont considérés suivant la direction longitudinale X, qui est considérée comme la direction principale de déplacement du véhicule.

Les termes "intérieur" et "extérieur" sont quant à eux considérés suivant la direction transversale Z.

Tandis que les termes "inférieur" et "supérieur" sont considérés suivant la direction d'élévation Y, respectivement comme indiquant un emplacement bas et haut.

Les termes "longitudinalement", "transversalement" et "d'élévation" se rapportent aux directions correspondantes X, Y et Z.

La référence 1 désigne de manière générale un dispositif d'évacuation de masse pour une structure 2 de siège.

Sur la structure 2 du siège 1, qui forme donc une armature, avec des garnitures telles que coussins et des accessoires de confort, divertissement ou esthétiques, montés sur la structure 2 pour obtenir un siège 3.

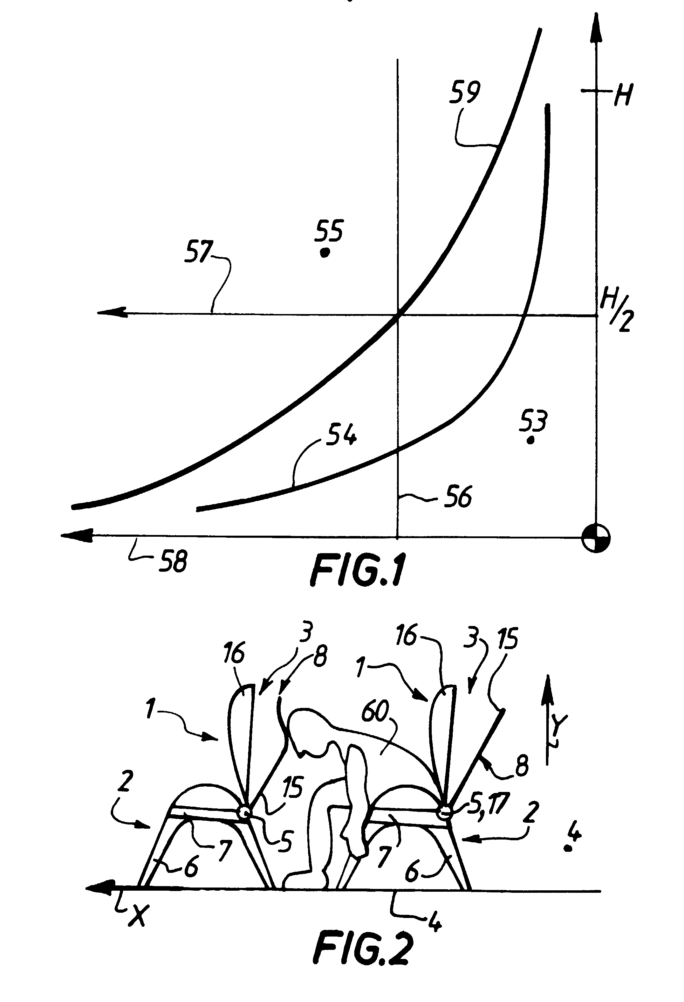

Ce siège 3 est lui même destiné à être monté dans un véhicule 4 de transport aérien, schématiquement représenté sur la figure 2.

De manière classique, un siège 3 est rigidement fixé sur un plancher du véhicule 4, par l'intermédiaire de glissières non représentées.

La structure 2 du siège 3, notamment pour un avion de ligne, est pourvue d'au moins un dispositif d'évacuation de masse 1. Dans le cas d'un siège 3 à plusieurs places, un dispositif 1 est prévu en face de chaque passager, en général.

Dans les réalisations illustrées, la structure 2 comporte un axe de basculement ou rotation 5 transversal.

Cette structure 2 de siège comporte au moins un piètement fixe 6, une structure d'assise 7, et une structure de dossier 8, inclinable autour de l'axe de rotation 5.

Dans les modes de réalisation représentés, le dossier du siège 3 peut être placé dans quatre positions principales dont une position assise, de service, dans laquelle le passager est assis, qui est déclinable suivant l'inclinaison de dossier choisie par le passager ; et
- la position allongée, position de service dans laquelle le passager est légèrement allongé.

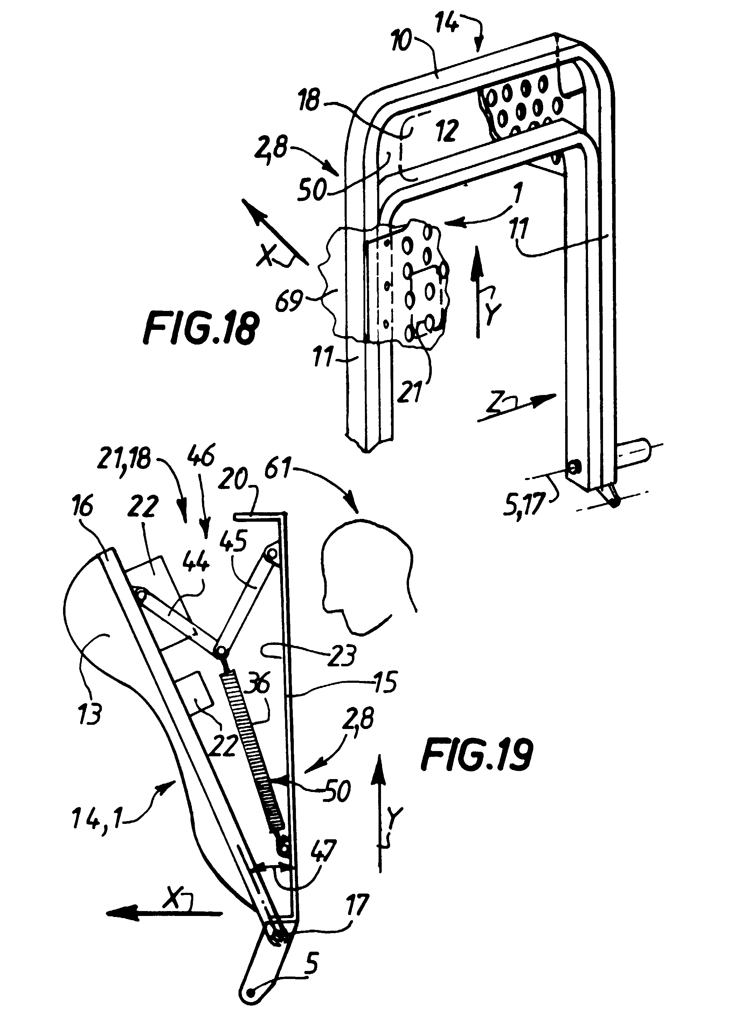

La structure 2 comprend sur la figure 18, un cadre 9 en forme générale en "U" dont l'âme transversale 10 forme le haut du dossier et les ailes 11 dans un plan d'élévation forment les chants latéraux du dossier.

Une tôle 12 perforée est fixée sur le cadre, pour supporter des garnitures ou coussins 13, visibles sur la figure 19.

Comme on le verra plus loin, cette tôle 12 est un emplacement approprié pour installer un système de rétention calibré, tel que ruban de bande d'accrochage.

Ces coussins 13 sont assemblés à la tôle 12 par exemple à l'aide de fixations rapides. Cela participe à la constitution des moyens d'adossement du siège 3.

La structure d'assise 7 comporte également des tôle 12, coussins 13 et leurs fixations.

Sur les figures, le dipositif 1 comporte une armature 14 montée sur la structure de dossier 8, comprenant au moins:
- un écran 15 de réception d'impact; et
- un organe 16 formant navette de support d'une partie au moins des moyens d'adossement (12, 13) et d'accessoires de confort, esthétiques et de divertissement qui sont décrits plus loin.

Dans des réalisations, une structure portante 8 du dossier, ayant pour fonction de supporter les organes d'adossement, est intégrée à la navette 16. Un tel organe est un coussin 13.

Dans d'autres réalisation, elle est intégrée à l'écran 15.

Enfin, des réalisations prévoient que la structure portant 8 est obtenue par coopération de l'écran 15 et de la navette 16.

L'organe 16 ou navette est monté sur la structure 2, déplacable sensiblement suivant une direction d'impact illustrée par les flèches X, par rapport à l'écran 15 de réception.

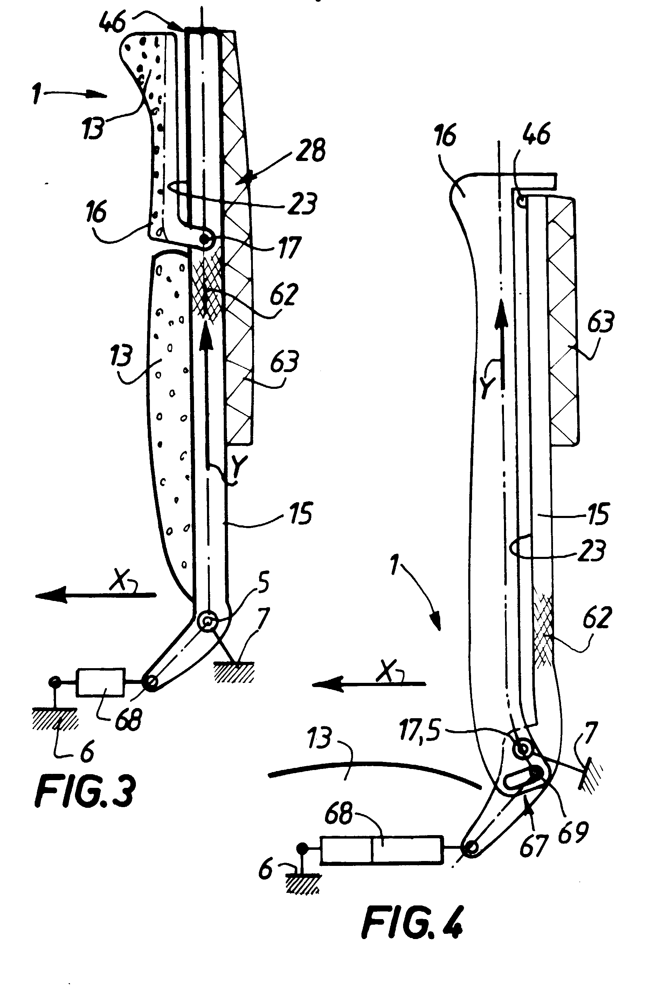

Sauf dans l'exemple de la figure 4, la navette 16 est articulée à rotation autour d'un axe 17 d'articulation sensiblement transversal.

Cet axe 17 est solidaire de la structure d'assise 7, dans les exemple illustrés, et de manière plus générale de la structure 2.

La navette 16 est déplacable entre deux positions extrêmes:
- l'une d'utilisation normale ou de repos (figures 3 à 5 par exemple), où l'organe formant navette 16 est proche de l'écran 15 de réception, et
- une position d'évacuation de masse où l'organe 16 formant navette (figures 2 et 6 à 12 par exemple) -et donc les masses qu'il supporte- est écarté localement de l'écran 15 de réception, sensiblement suivant la direction et le sens d'impact X.

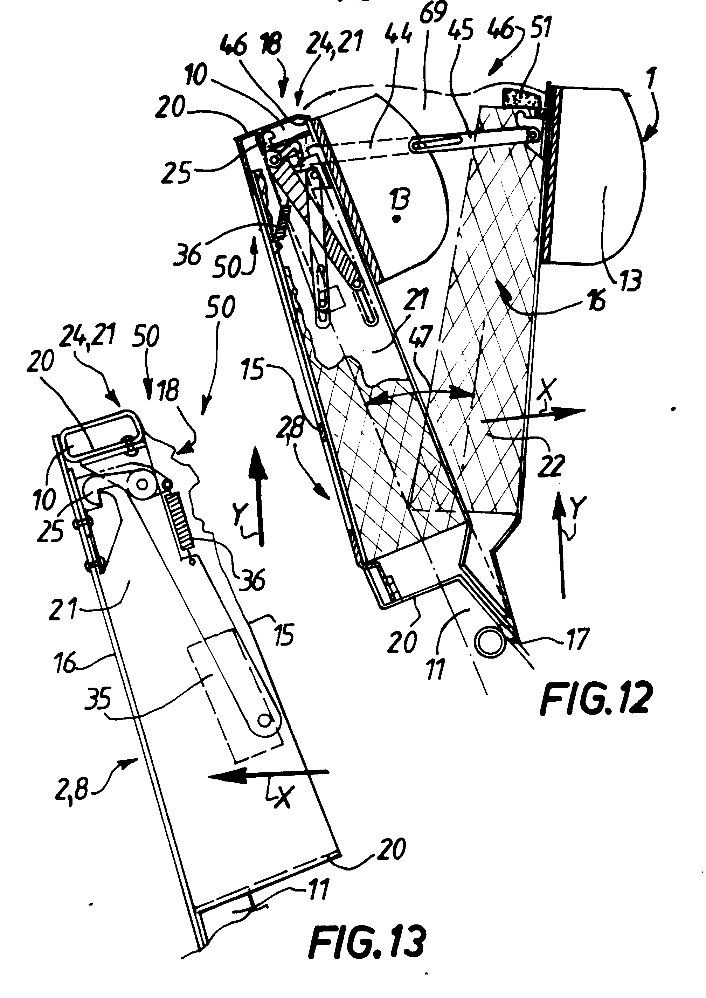

Le dispositif 1 comporte en outre des moyens à ouverture inertielle 18 d'arrimage de la navette 16 en position d'utilisation normale, dont des exemples sont illustrés sur les figures 12 à 17 et 19.

Ces moyens 18 à ouverture inertielle sont agencés pour libérer la navette 16 lorsque elle est soumise à une accéleration sensiblement suivant la direction et le sens d'impact X, supérieure à une valeur prédéterminée.

Dans les exemples, la valeur prédéterminée ou calibrée est de l'ordre de 2G à 5G.

Ainsi, la position d'évacuation de masse est déclenchée, lorsque l'armature 14 est montée, dès qu'un impact du passager 60 sur le dossier derrière la partie d'adossement du siège 3 est possible. De fait, l'organe formant navette 16 devant ce passager 60 est effacé, et l'impact de sa tête 61 est reçu par l'écran de réception 15, aménagé à cette fin.

Celà ressort bien de la figure 2.

L'écran de réception 15 est alors destiné, lorsque le dispositif et l'armature 14 sont montés, à rester dans une position générale fixe sensiblement parallèle à l'inclinaison de la structure de dossier 8, même lors de l'impact.

Une approche qualitative de l'évacuation de masse obtenue sur un siège est illustrée sur le diagramme de la figure 1.

Comme exposé plus haut, l'évacuation de masse vise à mettre hors de portée des masses susceptibles de blesser un passager 60, et en particulier sa tête 61, lors d'un choc.

Cette évacuation permet incidemment d'obtenir que certain constituants présentent lors d'un impact, une rigidité réduite par rapport aux constituants usuels, ce qui limite les conséquences négatives de l'impact.

Sur la figure 1, une première courbe haute 59 du diagramme qualitatif est en arc de cercle à convexité tournée vers les abscisses 58. Cette courbe devient sensiblement tangente aux ordonnées à proximité de la valeur H correspondant à la hauteur de la tête 61 d'un passager.

Cette courbe 59 est sécante à une droite 57 de valeur H/2 de hauteur médiane en ordonnées, et à une valeur moyenne 56 de course (par exemple de l'ordre de 150mm) en abscisses, définissant une zone supérieure 55 d'efficacité optimale (100%).

Une seconde courbe 54 basse, est sensiblement en hyperbole.

Elle (54) illustre une efficacité équilibrée dite iso-efficacité, dans une zone inférieure 53 où l'efficacité est comprise entre 0 et 100% exclusivement.

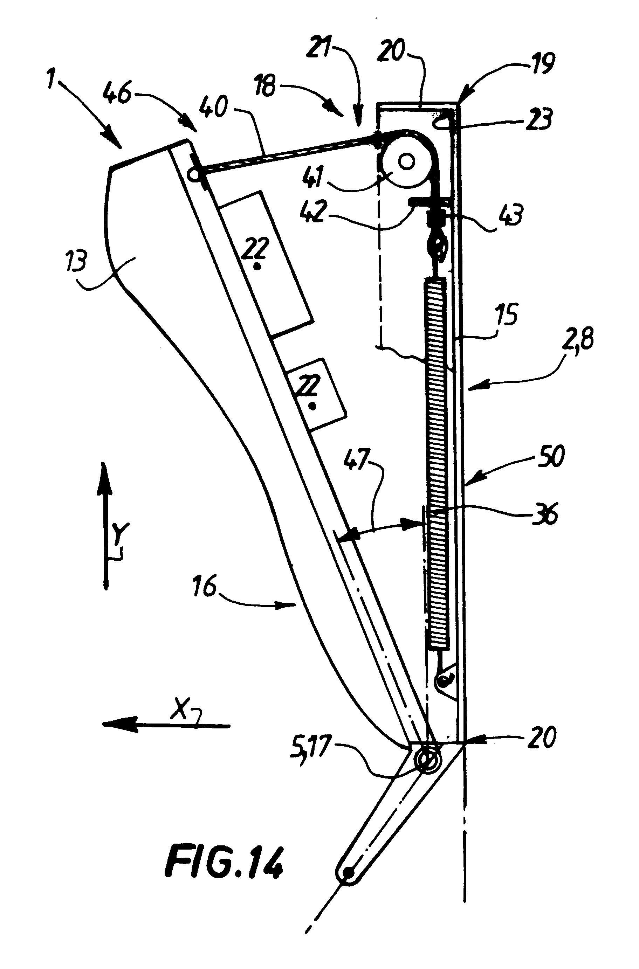

Dans les modes de réalisation représentés notamment sur les figures 14, 15 et 19, l'écran de réception d'impact 15 comprend un cadre 19 généralement rigide, par exemple en métal tel que tôle ou profilé d'aluminium.

Ce cadre 19 est ici en forme de prisme rectangulaire et délimité par deux bords transversaux 20 (inférieur et supérieur) et deux bords d'élévation longitudinaux.

Un bord transversal inférieur 20, sur la figure 14 est situé de manière proche et sensiblement parallèle à l'axe d'articulation 17, qui est ici confondu avec l'axe de basculement 5.

Un bord transversal 20 opposé, et donc supérieur, définit un méplat qui forme le sommet de la structure de dossier 8

La dimension de ce méplat du bord supérieur 20 suivant la direction X, est sensiblement égale à l'épaisseur générale de la navette 16.

Donc, la navette 16 et l'écran de réception 15 présentent des formes et dimensions telles que l'un peut en partie s'emboîter dans l'autre, en position d'utilisation normale.

Dans cette réalisation, la navette 16 est emboîtée dans l'écran 15 avec ses accessoires de confort (13), et de divertissement 22.

Sur les figures 3 à 7 par contre, suivant la direction et le sens d'impact X, l'écran 15 et la navette 16 sont disposés l'un devant l'autre, sans emboîtement.

Plus précisemment, la navette 16 est disposée contre une face avant 23 de l'écran de réception, et masque en majeure partie, sur la figure 4 totalement, cette face avant 23.

On a vu plus haut que le dispositif 1 comporte des moyens d'arrimage 18.

Ces moyens 18 sont en partie disposés à proximité du sommet de la structure 8 du dossier, suivant la direction d'élévation X.

Donc, ces moyens 18 sont à l'opposé de l'axe d'articulation 17 de la navette 16, suivant la direction d'élévation X et comportent un système 21 de rétention calibrée en effort de la navette 16.

Le système 21 est inertiel, et libère la navette 16 à une valeur d'accélération ici de l'ordre de 2G à 5G dans sa phase d'apparition.

Les moyens 18 comportent aussi, dans des exemples, un système 24 de verrouillage mécanique à ouverture automatique inertielle.

Le système 24 sécurise la rétention par le système 21, et est calibré pour retarder de manière contrôlée la libération de la navette 16.

Celà permet lorsque un tel système 24 est prévu, d'obtenir une tenue sécurisée en position de repos de la navette 16, à l'encontre de vibrations, sollicitations impulsionnelles faiblement énergétiques courante durant l'utilisation normale du siège 3, et qui pourraient déclencher un passage abusif de la navette 16 en position d'évacuation.

Le système 24 comporte au moins un point d'ancrage.

Dans les réalisations des figures 12, 13 et 16, 17, le système de verrouillage 24 comprend un crochet 25, destiné à permettre un maintien en position d'utilisation normale de la navette 16, et un "re-stockage" dans cette dernière suite à un déclenchement du dispositif d'évacuation 1.

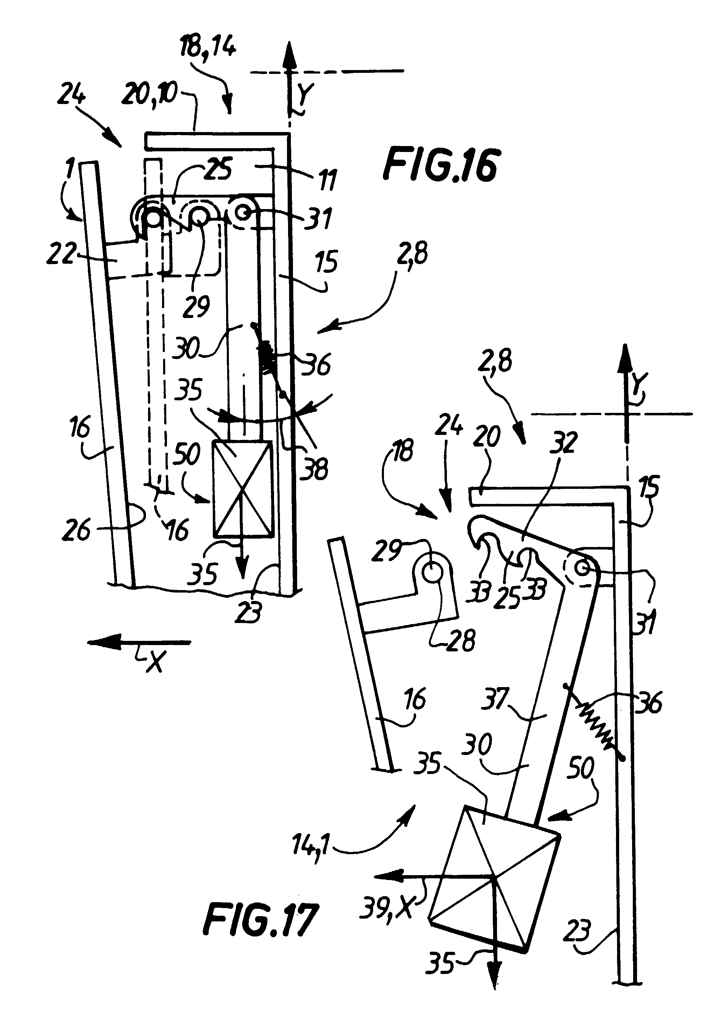

Dans le mode de réalisation des figures 16 et 17, l'organe formant navette 16 est monté sur l'écran de réception 15, et retenu à ce dernier de manière amovible au moyen d'un tel système 24 à crochet 25.

Donc, ce crochet 25 exerce ici la double fonction de système de verrouillage 24, et de maintien du retour en position "stockée normale", lors d'un impact, au sein de moyens de rappels qui sont décrits plus loin.

A cet effet, une face arrière 26 de la navette comporte un premier bras 27 d'accrochage, fixé rigidement en saillie sensiblement longitudinalement en position de repos, vers la face avant 23 de l'écran 15.

Ce premier bras 27 présente une forme de L, dont la hampe 28 est sensiblement parallèle à la direction d'élévation Y et étendu vers le haut, en position de repos.

A son extrémité libre, la hampe 28 possède un tenon transversal 29.

D'autre part, le système 24 possède un second bras 30 d'accrochage, formant balancier et monté sur l'écran de réception 15 suivant la direction longitudinale X.

Plus précisemment, le bras 30 est monté à rotation sur une patte en saillie longitudinalement de la face avant 23, autour d'un pivot transversal 31.

Le bras formant balancier 30 présente également une forme de L, dont la hampe s'étend sensiblement parallèlement à la direction d'élévation Y en position de repos.

En outre, le bras 30 comporte une aile 32 qui s'étend sensiblement parallèlement à la direction longitudinale X en position de repos.

Sur sa face inférieure, l'aile 32 définit deux encoches 33 d'accrochage, chacune apte à recevoir et maintenir le tenon 29. L'ouverture de chaque encoche 33 est dirigée sensiblement vers le bas.

Une encoche 33 arrière est destinée à assurer le maintien en position de repos de la navette 16, l'autre plus en avant fait partie des moyens de rappel, et assure le maintien de la navette 16, après évacuation, dans une position proche de la position de repos, dite de "re-stockage".

Cette position de re-stockage facilite l'évacuation d'un passager 60 de son siège 3, et limite les risques que ce dernier ne se heurte ou ne s'empêtre dans la navette restée déplongée, après l'évacuation de masse.

Sur les figures 16 et 17, un contrepoids 34 est fixé à l'extrémité libre inférieure de la hampe du bras 30 dépourvue des enchoches 33.

La masse 35 du contrepoids 34 est choisie pour qu'en position d'utilisation normale, elle permette grâce à son inertie le maintien dans cette position, du bras 30 et donc du bras 27 de retenue et de la navette 16.

En outre, les encoches 33 sont disposés de sorte qu'en position d'utilisation normale, celle qui est la plus en arrière coopère avec le tenon 29. Alors, la face arrière 26 est sensiblement parallèle aux directions X et Y, et donc à la face 23.

Sur les figures 16 et 17 un ressort 36 permet d'une part de retenir la rotation du bras formant balancier 30 dans une certaine limite.

D'autre part, le ressort 36 empêche les vibrations intempestives du bras 30. D'autre part, le ressort 36 aide au "re-stockage" après impact accidentel de la navette au travers des leviers.

Ce ressort 36 est fixé, de manière inclinée, à la hampe du bras 30 à proximité de son centre de gravité 37 et à l'écran de réception 15.

Plus précisément, le point de fixation à l'écran de réception 15 est plus proche de l'axe d'articulation 5 que le point de fixation à la hampe du bras 30.

Ainsi, le ressort 36 est incliné par exemple d'un angle 38 de l'ordre de 10° à 20° par rapport à la direction Y, de haut en bas d'avant en arrière, en position de repos.

Comme celà ressort de ce qui précéde, la navette 16 est reliée à l'écran de réception 15 grâce à la coopération entre le tenon 29 et les encroches 33.

Lorsqu'un impact d'une valeur supérieure à un seuil prédéterminé est appliqué au siège 3, la masse du contrepoids 34 est automatiquement soumise à une force de déplacement 39, tandis que l'écran de réception 15 reste immobile.

Le bras formant balancier 30 est alors entraîné en rotation autour de l'axe du pivot 31 et le tenon 29 est libéré de l'encoche 33 arrière.

L'organe formant navette 16 tend ainsi vers sa position avancée dite d'évacuation de masse.

A la fin de l'impact, le contrepoids 34 n'est soumis qu'à sa propre masse 35. Elle entraîne par conséquent le retour du bras formant balancier 30 à sa position d'utilisation normale.

D'autre part, l'organe formant navette 16 est alors rappelé vers sa position d'utilisation normale.

Simultanément, l'encoche avant 33 entre en coopération avec le tenon 29, comme représenté en trait plein sur la figure 16, pour bloquer l'organe formant navette 16, après l'impact.

Des modes de réalisation du système 21 sont illustrés.

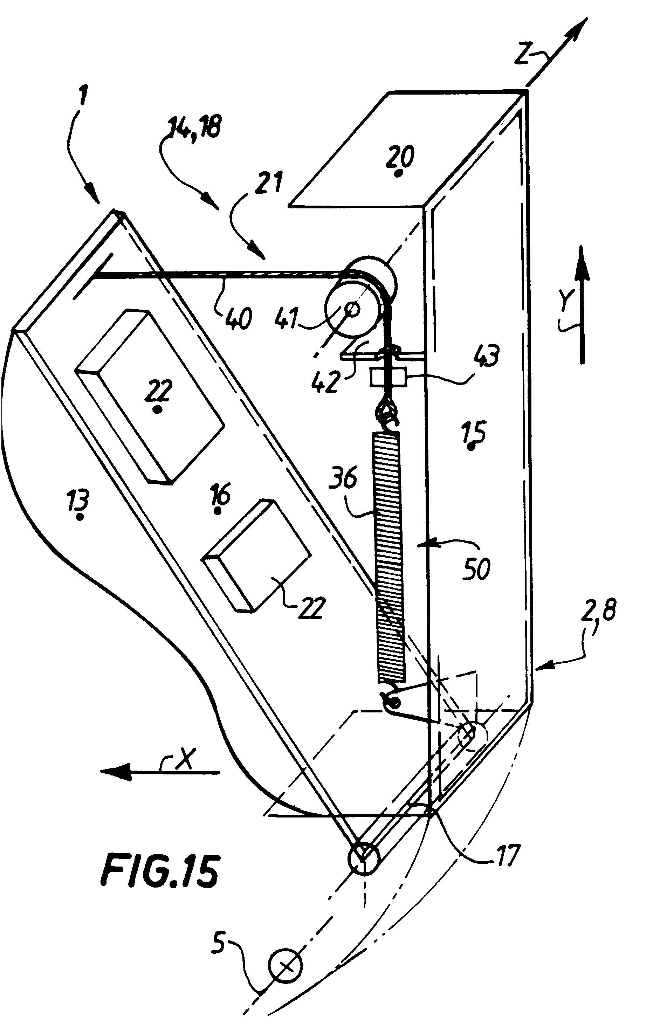

Dans le mode de réalisation des figures 14 et 15, l'organe formant navette 16 est arrimé à l'écran de réception 15 au moyen d'un câble de liaison 40 et d'un ressort de rappel 36.

Le câble 40 de liaison est fixé d'une part à une de ses extrémités avant et haute, à la navette 16.

D'autre part, son autre extrémité arrière et basse, est fixée à une extrémité supérieure mobile du ressort de rappel 36.

Le ressort de rappel 36 est en outre fixé par son autre extrémité inférieure fixe, intérieurement à l'écran 15, vers son bord transversal inférieur 21.

Le ressort de rappel 40 est disposé de sorte qu'en positions d'utilisation normale ou d'évacuation de masse, il s'étende sensiblement parallèlement à la direction d'élévation Y.

Par ailleurs, le câble de liaison 40 est guidé par une poulie 41, qui lui fait effectuer un renvoi d'angle, entre une section arrière inférieure sensiblement en élévation et une section avant supérieure sensiblement longitudinale.

Cette poulie 41 est montée folle sur l'écran 15 par l'intermédiaire d'un arbre transversal, ici disposé à proximité du sommet de cet écran 15.

La poulie 41 et le point d'attache de l'extrémité avant du câble de liaison 40 à l'organe formant navette 16 sont disposés de manière à se trouver sensiblement de niveau en élévation et transversalement l'un avec l'autre, en position d'utilisation normale.

Une paroi formant butée 42 est fixée transversalement à l'écran de réception 15. Cette paroi est étendue dans un plan transversal et longitudinal, contre et en saillie de la face avant 23 de l'écran 15. Cette paroi formant butée 42 comporte un orifice de passage libre du câble de liaison 40.

Une pièce 43 est rigidement fixée vers l'extrémité inférieure arrière du câble de liaison 40. Cette pièce 43 présente une forme et des dimensions telles qu'elle vient en butée contre la face inférieure de la paroi formant butée 42, lorsque le câble 40 atteint une position de tension maximale pour le ressort 36.

Ainsi, dans le mode de réalisation ces figures, en position d'utilisation normale, le ressort de rappel 36 se trouve dans une situation sensiblement non sollicitée.

Dans des réalisations, le ressort 36 est soumis à une tension initiale, ou précontrainte.

En revanche, dans la position d'évacuation de masse, le ressort de rappel 36 est sollicité, jusqu'à ce que la pièce 23 soit en butée contre la paroi 42.

De manière générale, des moyens de rappel 52 accumulent l'énergie nécessaire à leur fonctionnement lors du passage de la navette 16 en position d'évacuation.

Certaines réalisations prévoient toutefois des moyens de rappel actifs, par exemple avec un vérin alimenté par une bombonne de gaz sous pression.

Il est entendu que, sur les figures 14 et 15, la longueur du câble de liaison 40 dépend de l'angle d'inclinaison souhaité entre l'organe formant navette 16 et l'écran de réception 15 en position d'évacuation.

En outre, le ressort de rappel 36 est choisi de sorte qu'il puisse retenir l'organe formant navette 16, en position d'utilisation normale, sensiblement sans être sollicité.

Dans le mode de réalisation de la figure 19, l'organe formant navette 16 est relié à l'écran de réception 15 en trois points :
- comme dans les autres modes de réalisation, par un axe 17;
- d'une part, à proximité du sommet de la structure de dossier, par une paire de bielles articulées 44 et 45; et
- d'autre part, par un ressort 36, solidarisé à l'articulation intermédiaire des bielles 44 et 45.

La paire de bielles 44 et 45 forme un compas ou "V", dont une branche est étendue de l'articulation reliée au ressort 36 à la navette 16, l'autre étant étendue de l'articulation reliée au ressort 36 à la face 23 de l'écran.

Les bielles 44, 45 ont notamment pour fonction de limiter le déploiement de l'organe formant navette 16 par rapport à l'écran de réception 15.

Le ressort 36 est fixé rigidement également à l'écran de réception 15, et est choisi de sorte qu'en position d'utilisation normale, il ne soit sensiblement pas sollicité.

On comprend que la paire de bielles 44, 45 et le ressort 36 permettent de limiter le déplacement de l'organe formant navette 16 vers sa position d'évacuation de masse.

En outre, le ressort 36, qui est calibré en efforts, permet de retenir l'organe formant navette 16, du fait de la traction de haut en bas qu'il exerce sur l'articulation entre les bielles 44, 45.

Par ailleurs, le ressort 36 limite le déploiement des bielles 44, 45 l'une par rapport à l'autre.

Dans les modes de réalisation des figures 14, 16 et 19, le ressort 36 a également pour fonction de rappeler automatiquement l'organe formant navette 16 vers sa position d'utilisation normale, à la fin du phénomène ayant entraîné une évacuation de masse.

Dans le dispositif 1, sont en outre prévus des moyens formant butée 46.

Selon les réalisations, ces moyens 46 sont de deux types, soit passifs soit actifs.

Les moyens 46 passifs assurent le positionnement relatif de la navette 16 et de l'écran 15, durant l'utilisation normale du siège 3. Tel est le cas sur les figures 3 et 4.

Les moyens 46 actifs assurent le positionnement relatif de la navette 16 et de l'écran 15 en position d'évacuation. Tel est le cas sur les figures 12 et 14 ou 19.

Sur la figure 3, ces moyens 46 comportent une partie avant supérieure de la face 23 de l'écran 15.

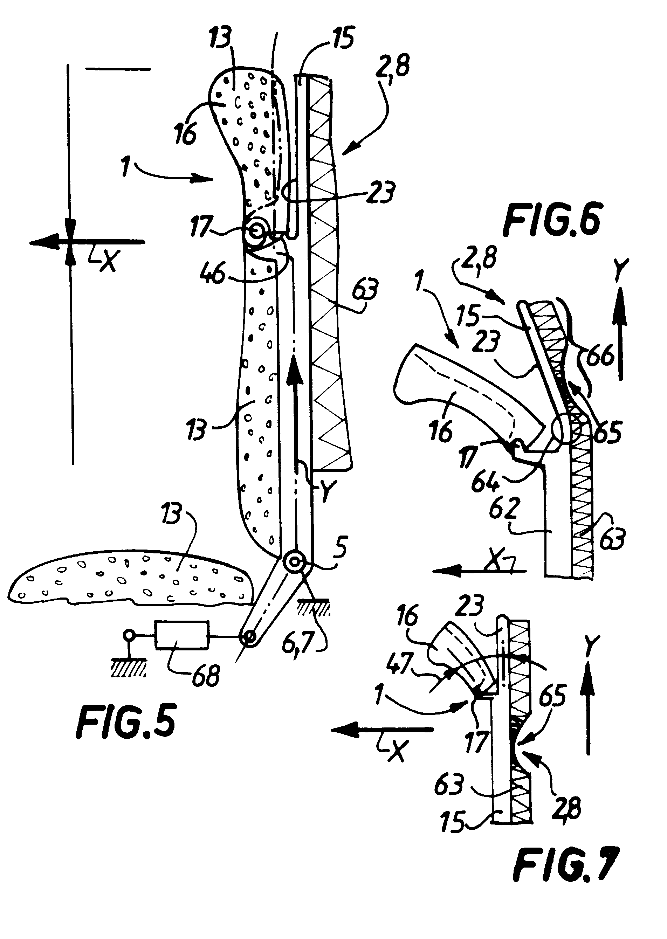

Sur la figure 5, ces moyens 46 comportent un plot en saillie d'élévation, sur la face supérieure d'un épaulement en saillie longitudinalement de la face 23 de l'écran 15.

Sur la figure 12, ces moyens 46 comportent une surface arrière de l'âme du "U" de la structure du dossier 8.

De manière générale, les moyens d'arrimage comportent au moins une butée 46 destinée à limiter le déplacement de l'organe formant navette 16 vers sa position d'évacuation de masse.

La butée est conformée pour qu'en position d'évacuation de masse, l'organe formant navette 16 soit écarté de l'écran de réception 15 d'un angle 47 par rapport à une direction d'élévation, de bas en haut et depuis l'arrière vers l'avant, de l'ordre de 15° à 45°.

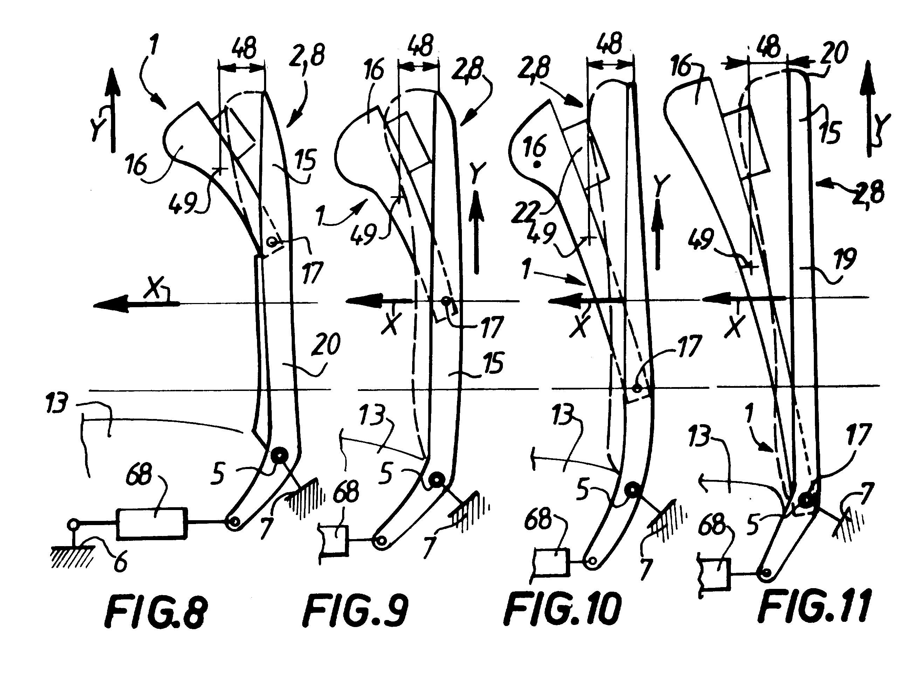

En se reportant aux figures 8 à 11, on comprend que cet angle 47 est déterminé en fonction de la hauteur de l'axe 17, pour que la distance 48 longitudinalement entre la face avant 23 de l'écran 15 et la projection en élévation du centre de gravité 49 de la navette 16, soit sensiblement égale à une valeur constante prédéterminée.

Dans les réalisations illustrées, la distance 48 est de l'ordre de 150mm.

Les moyens formant butée 46 comprennent dans les exemples évoqués une structure fixe relativement à l'écran de reception 15 et contre laquelle l'organe formant navette 16 vient en butée.

Dans d'autres réalisations, ces moyens 46 comportent un lien tel que le câble 40 ou les jeux de biellettes 44 et 45, relié à l'organe formant navette 16 et l'écran 15, et étendu entre eux en position d'évacuation.

Ainsi, les moyens formant butée 46 comprennent sur la figure 12, une paire de bielles 44 et 45 reliées longitudinalement entre elles et articulées d'une part à l'écran 15 de réception et d'autre part à la navette 16.

Revenons maintenant aux différentes réalisations de systèmes de rétention 21 des moyens d'arrimage 18.

On a déjà vu le cas du ressort calibré 36 des figures 14 et 15, qui font partie d'un tel système ou moyens 21 à rétention continue, comme le contrepoids 34 à masse 35 calibrée.

Des moyens de rétention 21 comportent des moyens mécaniquement "fusibles" ponctuels, par exemple multiples, tels que notamment au moins un:
- joint de colle ou analogues;
- bande d'accrochage amovible à deux rubans (notamment de type Velcro);
- point de soudure;
- point de solidarisation par obstacle tel que clinchage, rivet fusible ou analogues;
- moyens de pincement élastique tels qu'agrafe dite "clip"; et
- section fusible de matériau de l'écran et/ou de l'organe formant navette.

La figure 18 montre un emplacement pratique pour un système 21 à bande d'accrochage amovible à deux rubans. Un ruban est solidarisé à la tôle 12, l'autre à la navette 16. On voit sur la figure 18, un espace 50 pratique pour le montage de moyens de déclenchement inertiel des moyens 18.

Sur la figure 12, on voit une bande d'accrochage 51, cousue sur l'habillage 69 de coussins 13, et agencée pour libérer la navette 16 en dégageant une ouverture dans son tissu.

Comme on l'a vu sur la figure 19, le ressort 36 des moyens d'arrimage 18 fait aussi office de moyens 52 de rappel immédiat de l'organe formant navette 16 vers l'écran de réception 15, à la fin du phénomène ayant entraîné l'impact.

Au lieu du ressort 36, un jeu de liens élastiques ou moins "sandow", un vérin à gaz ou analogues est prévu dans des réalisations, en tant que moyens de rappel 52.

Sur les figures 3 à 7, l'écran de réception 15 comporte au une partie 62 en matériau structurellement léger tel que panneau en nid d'abeille, et une partie arrière 63 d'amortissement de chocs par écrasement.

La partie 63 fait office de rembourrage local.

Sur la figure 6, l'écran de réception 15 comporte une zone 64 préférentielle de flexion contrôlée suivant la direction et le sens d'impact X, de sorte qu'en cas d'impact visualisé en 65 supérieur à une valeur prédéterminée, une partie de l'énergie du choc est absorbée par une déformation plastique d'une partie haute 66 de l'écran et comporte aussi une butée 67.

Sur la figure 4, l'écran 15 est monté déplaçable par l'intermédiaire d'une articulation 17 de transfert partiel de la fonction d'évacuation, cette butée 67 limitant un débattement la navette 16 suivant la direction et le sens X d'impact.

Un élément d'amortissement 68 tel que vérin d'inclinaison de dossier est relié à cet écran 15, de façon à limiter le débattement en constituant un amortisseur s'y opposant.

Dans cette réalisation où l'organe formant navette 16 comporte des moyens de guidage en rotation autour de l'axe d'articulation 5 transversal, tandis que l'écran de réception est monté sur cet organe 16 par l'intermédiaire du même axe (17) et possède au moins une butée 67 de tranfert, telle qu'une lumière oblongue sensiblement longitudinale dans laquelle est logé un pion, ici l'axe 17, apte à limiter le débattement.

La butée 67 de transfert est ici distincte de l'axe 5 de l'organe formant navette 16, et étendue à distance en élévation vers le bas de celle-ci.

Par contre, la structure de dossier 8 et l'organe formant navette 16 sont montés autour de deux axes transversaux communs 5, 17 sur la figure 2 ou 11.

Tandis que sur la figure 9, l'organe formant navette 16 est monté déplacable autour d'un axe transversal 17 proche en élévation du milieu de la structure de dossier 8, entre son axe de basculement 5 et son sommet.

Sur la figure 10, l'organe formant navette est monté déplacable autour d'un axe transversal 17 situé en élévation entre le milieu de la structure 8 de dossier et son axe de basculement 5.

Par contre la figure 8 prévoit que l'axe transversal 17 est situé en élévation sensiblement à mi-distance entre le milieu de la structure de dossier 8 et son sommet.

En élévation longitudinale une navette 16 est donc ici montée sur une structure de dossier 8 à l'aide d'un axe d'articulation transversal 17 situé, respectivement:
- entre le sommet et la moitié du dossier;
- à proximité de la moitié du dossier;
- entre la moitié et l'articulation de basculement du dossier; et
- avec l'axe de montage de la navette et de basculement du dossier confondus, comme sur la figure 18.

Le siège 3 comportant le dispositif 1 qui vient d'être décrit est typiquement destiné à faire partie d'un ensemble de sièges disposés en rangs consécutifs.

Il comporte au moins un organe formant navette 16 avec un ou plusieurs:
- accessoire de confort tel que coussin 13, repose-tête, tablette ou analogues; et/ou
- accessoire 22 de divertissement tel que téléphone, écran de visualisation, système audio/vidéo, ou analogues.

D'autres accessoires, tels que capôts esthétiques sont prévus sur un siège 3 usuel.

On comprend maintenant que les caractéristiques de l'invention permettent de pallier les problèmes des techniques connues.

Bien que l'invention ait été illustrée seulement dans le cas du montage d'un dispositif d'évacuation de masse 1 sur le dossier d'un siège 3, il est clair qu'un même dispositif 1 est monté dans certaines réalisations, sur un autre équipement de bord du véhicule, par exemple sur une cloison en regard d'un siège en tête de rang.

## Revendications

1. Dispositif (1) d'évacuation de masse destiné à une structure de dossier (8) de siège (3) de véhicule (4) pour le transport de passagers; pour qu'une partie au moins de la masse de la structure (8) soit mise hors de la portée de la tête (61) d'un passager (60) installé derrière le siège (3); caractérisé en ce qu'il (1) comporte au moins une armature (14) montée sur la structure de dossier, comprenant un écran (15) de réception d'impact et un organe formant navette (16) de support d'une partie au moins des moyens d'adossement du dossier et/ou d'accessoires de confort, esthétiques ou de divertissement; l'organe formant navette (16) étant monté déplaçable sensiblement suivant une direction d'impact (X), par rapport à l'écran (15) de réception, entre deux positions extrêmes : l'une d'utilisation normale ou de repos, et l'autre d'évacuation de masse, où l'organe formant navette (16) est écarté de l'écran (15) de réception sensiblement suivant la direction et un sens d'impact (X); des moyens à ouverture inertielle d'arrimage (18) de l'organe formant navette (16) en position de repos étant agencés pour libérer cet organe lorsqu'il (16) est soumis à une accéleration sensiblement suivant la direction et le sens d'impact (X), supérieure à une valeur prédéterminée.

2. Dispositif (1) selon la revendication 1, caractérisé en ce que l'étendue de la surface occupée par l'écran (15) de réception est au moins égale à la surface potentielle d'impact de la tête (61) d'un passager à l'arrière du siège, par exemple installé dans un autre siège.

3. Dispositif (1) selon la revendication 1 ou 2, caractérisé en ce que l'organe formant navette (16) et l'écran (15) de réception présentent des formes et dimensions telles que l'un puisse au moins en partie s'emboîter dans l'autre, en position d'utilisation normale, par exemple avec des accessoires (13) de confort et/ou esthétiques et/ou de divertissement (22), est emboîté dans l'écran (15).

4. Dispositif (1) selon l'une des revendications 1 à 3, caractérisé que, suivant la direction et le sens d'impact (X), l'écran (15) de reception et l'organe formant navette (16) sont disposés au moins en partie l'un devant l'autre, dans une réalisation, l'organe formant navette (16) est disposé contre une face (23) avant de l'écran (15) de réception, par exemple cet organe masque en majeure partie, voire totalement, la face avant de l'écran (15).

5. Dispositif (1) selon l'une des revendications 1 à 4, caractérisé que les moyens d'arrimage (18) inertiels sont au moins en partie disposés à proximité d'un sommet de l'armature (14) suivant une direction d'élévation (Y), et par exemple à l'opposé d'un axe (17) d'articulation de l'organe formant navette (16), suivant la direction d'élévation.

6. Dispositif (1) selon l'une des revendications 1 à 5, caractérisé que les moyens d'arrimage (18) comportent un système de rétention (21) de la navette (16), calibré en effort, par exemple ce système (21) comporte des moyens à rétention continue, tels que ressort et/ou masse calibrés.

7. Dispositif (1) selon la revendication 6, caractérisé que le système (21) de rétention comporte des moyens fusibles ponctuels, par exemple multiples, tels que notamment au moins un:
- joint de colle ou analogues;
- bande d'accrochage amovible à deux rubans;
- point de soudure;
- point de solidarisation par obstacle tel que clinchage, rivet fusible ou analogues;
- moyens de pincement élastique tels qu'agrafe dite "clip"; et
- section mécaniquement "fusible" de matériau de l'écran (15) et/ou de l'organe formant navette (16).

8. Dispositif (1) selon l'une des revendications 1 à 7, caractérisé que les moyens d'arrimage (18) comprennent en outre un système de verrouillage mécanique (24) sécurisant la rétention de l'organe formant navette (16), calibrés en effort, par exemple le système de verrouillage comprend au moins un crochet (25) ou analogue, destiné à permettre un maintien en position d'utilisation normale de l'organe formant navette (16), suite à un déclenchement du dispositif (1) d'évacuation.

9. Dispositif (1) selon l'une des revendications 1 à 8, caractérisé en ce que les moyens d'arrimage (18) comportent des moyens formant butée (46), tels qu'au moins une butée active, destinée à limiter le déplacement de l'organe formant navette (16) dans sa position d'évacuation de masse, par exemple un butée active est conformée pour qu'en position d'évacuation de masse, l'organe formant navette (16) soit écarté de l'écran (15) de réception d'un angle par rapport à une direction d'élévation, de bas en haut et depuis l'arrière vers l'avant, de l'ordre de 15° à 45°.

10. Dispositif (1) selon l'une des revendications 1 à 9, caractérisé qu'il (1) comporte des moyens formant butée (46), tels qu'au moins une butée passive, agencés pour soutenir le passage des efforts d'adossement vers l'écran (15) de réception.

11. Dispositif (1) selon l'une des revendications 9 ou 10, caractérisé que les moyens formant butée (46) comprennent par exemple au moins:
- une structure fixe relativement à l'écran (15) de reception et contre laquelle l'organe formant navette (16) vient en butée et/ou
- un lien tel que câble -éventuellement à poulie de guidage- ou bielle (44, 45), relié à l'organe formant navette (16) et l'écran (15) de réception, et étendu entre eux en position d'évacuation, par exemple, les moyens formant butée comprennent une paire de bielles reliées entre elles et articulées d'une part à l'écran (15) de réception et d'autre part à l'organe formant navette (16).

12. Dispositif (1) selon l'une des revendications 1 à 11, caractérisé que les moyens d'arrimage (18) comprennent des moyens de rappel (52) immédiat de l'organe formant navette (16) vers l'écran (15) de réception, après que la navette (16) ait atteint sa position d'évacuation, par exemple ce tels moyens comportent au moins un ressort, jeu de liens élastiques ou "sandow", vérin à gaz ou analogues.

13. Dispositif (1) selon la revendication 12, caractérisé que les moyens de rappel (52) comportent des moyens de blocage dans une position proche ou similaire à la position de repos, après rappel depuis la position d'évacuation.

14. Dispositif (1) selon l'une des revendications 1 à 13, caractérisé que l'écran (15) de réception comporte au moins une partie :
- en matériau structurellement léger (62) tel que panneau en matière synthétique, nid d'abeille ou analogues et/ou
- d'amortissement de chocs par écrasement (63) sur une face arrière, tel que rembourrage local.

15. Dispositif (1) selon l'une des revendications 1 à 14, caractérisé que l'écran (15) de réception comporte au moins une zone préférentielle (64) de flexion contrôlée suivant la direction et le sens d'impact, pour qu'en cas d'impact supérieur à une valeur prédéterminée, une partie de l'énergie du choc est absorbée par une déformation plastique d'une partie de l'écran (15).

16. Dispositif (1) selon l'une des revendications 1 à 15, caractérisé que l'écran (15) de réception est monté déplaçable par l'intermédiaire d'une articulation (17) et comporte une butée (67) de transfert partiel de la fonction d'évacuation, cette butée (67) limitant un débattement de la navette (16) suivant la direction et le sens d'impact (X).

17. Dispositif (1) selon la revendication 16, caractérisé qu'un élément d'amortissement (68) tel que vérin d'inclinaison de dossier est relié à cet écran (15), de façon à limiter le débattement en constituant un amortisseur s'y opposant, par exemple l'organe formant navette (16) comporte des moyens de guidage en rotation autour d'un axe d'articulation transversal, tandis que l'écran (15) de réception est monté avec au moins une butée de tranfert (67), telle qu'une lumière oblongue sensiblement longitudinale dans laquelle est logé un pion (17) apte à limiter le débattement.

18. Dispositif (1) selon l'une des revendications 16 ou 17, caractérisé que la butée de transfert (67) est distincte de l'axe de l'organe formant navette (16), par exemple étendue à distance en élévation (E) vers le bas.

19. Structure (2) de siège de véhicule de transport en commun, notamment d'avion de ligne, pourvue d'au moins un tel dispositif (1) d'évacuation selon l'une des revendications 1 à 18, caractérisée en ce qu'elle (2) comporte au moins un piètement fixe (6), une structure d'assise (7), et une structure de dossier (8), montées sur le piétement, la structure de dossier étant inclinable autour d'un axe de basculement (5) sensiblement transversal.

20. Structure (2) selon la revendication 19, caractérisée en ce que la structure de dossier (8) et l'organe formant navette (16) sont montés autour de deux axes (5; 17) transversaux proches notamment en élévation, par exemple autour d'un axe commun.

21. Structure (2) selon la revendication 19, caractérisée en ce que l'organe formant navette (16) est monté déplacable autour d'un axe transversal proche en élévation du milieu de la structure de dossier, entre son axe de basculement et son sommet.

22. Structure (2) selon la revendication 19, caractérisée en ce que l'organe formant navette (16) est monté déplacable autour d'un axe transversal situé en élévation entre le milieu de la structure de dossier et son axe de basculement, par exemple, l'axe transversal est situé en élévation sensiblement à mi-distance entre le milieu de la structure de dossier et son axe de basculement.

23. Structure (2) selon la revendication 19, caractérisée en ce que l'organe formant navette (16) est monté déplacable autour d'un axe transversal situé en élévation entre le milieu de la structure de dossier et son sommet.

24. Structure (2) selon l'une quelconque des revendications 19 à 23, caractérisée en ce que la structure de dossier (8) porteuse d'organes d'adossement tels que des coussins (13), est intégrée à la navette et/ou à l'écran.

25. Siège (3) de véhicule (4) de transport, par exemple aérien, équipé d'au moins un dispositif (1) d'articulation selon l'une des revendications 1 à 18 et/ou d'une structure (2) selon l'une des revendications 19 à 24, caractérisé en ce qu'il (3) destiné à faire partie d'un ensemble de sièges disposés en rangs consécutifs, et comporte au moins un organe formant navette (16) emportant un ou plusieurs:
- accessoire de confort tel que coussin (13), repose-tête, tablette, cendrier ou analogues; et/ou
- accessoire esthétiques tels que garniture ou capôt; et/ou
- accessoire (22) de divertissement tel que téléphone, écran (15) de visualisation, système audio/vidéo, ou analogues.

26. Véhicule (4) de transport pour passagers par exemple aérien, caractérisé en ce qu'il (4) est équipé d'au moins un dispositif (1) d'evacuation selon l'une des revendications 1 à 18 et/ou d'une structure (2) selon l'une des revendications 19 à 24 et/ou d'un siège (3) selon la revendication 25.
